# EUROPEAN PATENT APPLICATION

(11) **EP 4 631 698 A1**
(43) Date of publication of application: **15.10.2025**
(21) Application number: 25167261.4
(22) Date of filing: 31.03.2025
(51) Int. Cl.: B29C 64/255, B08B 5/00, B22F 10/66, B22F 10/68, B29C 64/35, B33Y 30/00, B33Y 40/20, B22F 12/70

(54) **DE-POWDERING OF ADDITIVE MANUFACTURING BUILD**

(30) Priority: 11.04.2024 US 202463632755 P
(71) Applicant: General Electric Company, Cincinnati, Ohio 45215 (US)
(72) Inventor: THOMPSON, Brian Thomas, Evendale, 45215 (US); SHI, Jinjie, Evendale, 45215 (US); NASR, Hojjat, Evendale, 45215 (US); LANG, Jay Matthew, Evendale, 45215 (US); SPRAGUE, Connor, Evendale, 45215 (US); TUBESING, Chris, Evendale, 45215 (US); MURPHY, William Cosmo, Evendale, 45215 (US); FOSTER, Gregory Thomas, Evendale, 45215 (US); RAABE, Benjamin H., Evendale, 45215 (US); GRIFFIN, JR., Darrell Vincent, Evendale, 45215 (US); RUDLOFF, Ruediger German, Evendale, 45215 (US)
(74) Representative: Hafner & Kohl PartmbB

(57) **Abstract**

A de-powdering system includes one or more sidewalls defining a support chamber configured to contain an additive manufacturing build where the additive manufacturing build includes one or more objects disposed within a powder build material. A fluidization mechanism is fluidically couplable to a fluid source and includes one or more flow channels fluidically coupled to the support chamber. The fluid source is actuatable to provide a fluid from the fluid source to the support chamber and inject the fluid into the support chamber via the one or more flow channels. The one or more flow channels are oriented to introduce a swirling flow of the fluid into the support chamber to fluidize at least a portion of the powder build material within the support chamber.

## Description

### FIELD

The present disclosure generally pertains to additive manufacturing machines and systems, and more particularly, systems and methods for de-powdering of an additive manufacturing build.

### BACKGROUND

Three-dimensional objects may be additively manufactured using an additive manufacturing machine. One type of additive manufacturing is binder jetting. In binder jet additive manufacturing, a liquid binder is used to join particles of a powder to form a three-dimensional object. For example, a controlled pattern of the liquid binder is applied to successive layers of the powder in a powder bed such that the layers of the material adhere to one another to form a three-dimensional green part. Through subsequent processing (e.g., sintering), the three-dimensional green part can be formed into a finished three-dimensional part.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 schematically depicts a de-powdering system in accordance with exemplary embodiments of the present disclosure.
FIG. 2 is a schematic diagram depicting a partial, isometric section view of a de-powdering device of the de-powdering system of FIG. 1 in accordance with exemplary embodiments of the present disclosure.
FIG. 3 is a schematic diagram depicting a partial, isometric section view of a fluidization mechanism of the de-powdering device of FIGS. 1 and 2 in accordance with exemplary embodiments of the present disclosure.
FIG. 4 is a schematic diagram depicting an isometric view of an exemplary flow channel of the fluidization mechanism in accordance with exemplary embodiments of the present disclosure.
FIG. 5 schematically depicts a de-powdering system in accordance with another exemplary embodiment of the present disclosure.
FIG. 6 is a schematic diagram depicting a portion of a de-powdering device of the de-powdering system of FIG. 5 taken along the line 6-6 of FIG. 5 in accordance with exemplary embodiments of the present disclosure.
FIG. 7 schematically depicts a de-powdering system in accordance with another exemplary embodiment of the present disclosure.
FIG. 8 is a schematic diagram depicting a portion of a de-powdering device of the de-powdering system of FIG. 7 taken along the line 8-8 of FIG. 7 in accordance with exemplary embodiments of the present disclosure.
FIG. 9 is a schematic diagram depicting a de-powdering process with another de-powdering system according to exemplary embodiments of the present disclosure.
FIG. 10 is a schematic diagram depicting a de-powdering process with another de-powdering system according to exemplary embodiments of the present disclosure.
FIG. 11 is a schematic diagram depicting a de-powdering process with another de-powdering system according to exemplary embodiments of the present disclosure.
FIG. 12 is a block diagram depicting an example computing system according to example embodiments of the present disclosure.
FIG. 13 depicts a method for de-powdering an additive manufacturing build in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part. In certain post printing processes, the green body part may undergo a de-powdering process. The de-powdering process removes portions of the powder that have not been bound (e.g., adhered) by the chemical binder. However, de-powdering of the green body part is generally done before heat treating (e.g., presintering) the green body part. Heat treating the green body part removes the chemical binder and builds handling strength. Therefore, during a de-powdering processes, the green body part may have insufficient handling strength and be susceptible to damage.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

The present disclosure generally provides an apparatus and technique for de-powdering of an additively manufactured three-dimensional object. In exemplary embodiments, the de-powdering apparatus includes a support chamber supporting an additive manufacturing build. The de-powdering apparatus also includes a fluidization mechanism for injecting fluid into the support chamber to fluidize the unbound powder material. The fluid is injected into the support chamber in such a manner to create a swirling fluid flow within the support chamber. The swirling fluid flow fluidizes the packed powder build material inside the support chamber and generates a negative pressure towards the center of the support chamber that keeps powder build material inside the support chamber. Embodiments of the present disclosure significantly reduce de-powdering labor and improve a yield of undamaged green objects. In exemplary embodiments, a fluid is introduced into a densely-packed powder bed to loosen the powder to a fluid-like status. With the swirling fluid flow, the packed powder starts moving around and becomes fluidized, resulting in the powder becoming much easier to be evacuated. The fluidized powder can be easily evacuated or vacuumed from the powder bed and leave the green objects de-powdered. In exemplary embodiments, the green objects can be filtered out by a perforated secondary container. Embodiments of the present disclosure provide a fluidization mechanism that has a reduced requirement on flow rate, thereby lowering the risk of green body damage. In additional exemplary embodiments of the present disclosure, various types of fluidization mechanisms are used to fluidize unbound powder build material that may be removed through various types of sieve devices such that the additively manufactured objects may be easily removed from the fluidized unbound powder build material without damaging the green objects.

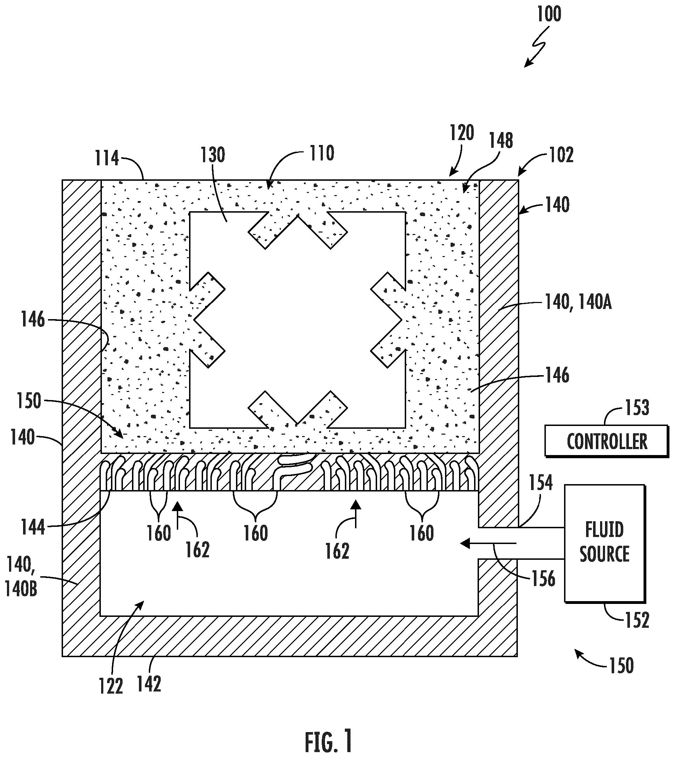

Referring now to FIG. 1, the presently disclosed subject matter will now be described in further detail. FIG. 1 schematically depicts a de-powdering system 100 in accordance with exemplary embodiments of the present disclosure. In the illustrated embodiment, the de-powdering system 100 includes a de-powdering device 102 configured to receive and support an additive manufacturing build 110 having one or more three-dimensional parts or objects 130 suspended or disposed within a powder build material 114. As described above, in an exemplary binder jet additive manufacturing process, one or more layers of the powder build material 114 are deposited onto a build surface. A print head dispenses a binder to the one or more layers of the powder build material 114 to form the one or more objects 130 on a layer-by-layer basis, typically within a build box.

In the illustrated embodiment, the de-powdering device 102 includes a support chamber 120 and a flow chamber 122. In exemplary embodiments, the support chamber 120 contains the additive manufacturing build 110. The additive manufacturing build 110 may be moved into the support chamber 120 after completion of the printing process or the additive manufacturing build 110 may be formed within the support chamber 120 (e.g., the support chamber 120 being a build box for the additive manufacturing build 110). In exemplary embodiments, the support chamber 120 and the flow chamber 122 are defined by one or more sidewalls 140. For example, in exemplary embodiments, the support chamber 120 and the flow chamber 122 may be configured having a circular, elliptical, or other type of curved surface geometry such that a single sidewall 140 defines the geometric boundary of the support chamber 120 and the flow chamber 122. However, it should be understood that additional sidewalls 140 may be used to define the support chamber 120 and the flow chamber 122 having other geometries (e.g., square, rectangular, etc.). In the illustrated embodiment, the one or more sidewalls 140 are depicted as a continuous wall structure defining both the support chamber 120 and a flow chamber 122; however, it should be understood that the support chamber 120 and a flow chamber 122 may be defined by separate sidewalls or wall structures. For example, one or more sidewalls 140A may define the support chamber 120, and one or more sidewalls 140B may define the flow chamber 122. In such an embodiment, the support chamber 120 and the flow chamber 122 may be formed as separate components and be coupled together. In FIG. 1, the flow chamber 122 comprises a wall 142 defining a lower boundary of the flow chamber 122, and a wall 144 disposed spaced apart from the wall 142 and extending transversely to the one or more sidewalls 140 such that the wall 144 extends laterally to opposing sides 146 of the one or more sidewalls 140. In exemplary embodiments, the wall 144 is disposed contiguously with the support chamber 120 and the flow chamber 122 such that the wall 144 defines a lower boundary of the support chamber 120 and an upper boundary of the flow chamber 122. As depicted in FIG. 1, the one or more sidewalls 140 and the wall 144 define an open-sided cavity 148 of the support chamber 120 for receiving the additive manufacturing build 110 therein.

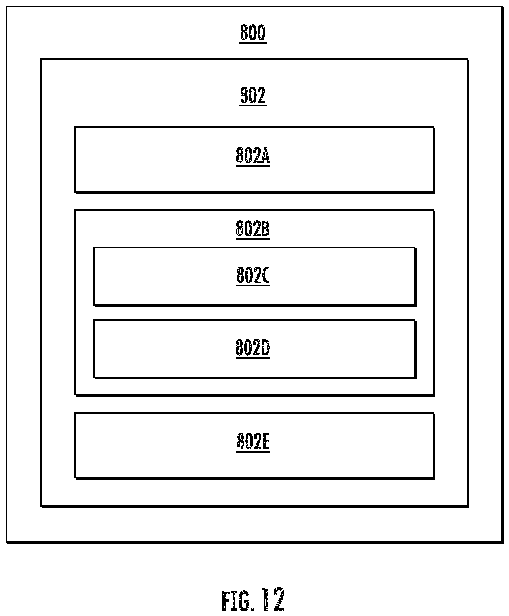

In exemplary embodiments, the de-powdering system 100 also comprises a fluidization mechanism 150 configured to inject a fluid into the support chamber 120 to fluidize the unbound powder build material 114 surrounding the one or more objects 130. As used herein a "fluidization" of the unbound powder build material 114 may comprise any one of multiple states of an aerated or fluid-like condition of the powder build material 114 such as, by way of non-limiting example, a smooth phase, a bubbling phase, a turbulent phase, or a conveying phase based on different velocities of a fluid flowing into or though the powder build material 114. In exemplary embodiments, the fluidization mechanism 150 may comprise a manifold or any other type of structure having one or more openings, flow channels, fluid inlets, fluid outlets, nozzles, or apertures for injecting a fluid into the additive manufacturing build 110. In exemplary embodiments, a fluid source 152 is fluidically coupled or couplable to the flow chamber 122 via one or more ports 154. The fluid source 152 may comprise a pressurized fluid source 152 and may be actuatable to inject or otherwise provide a pressurized fluid into the flow chamber 122 (e.g., in a flow direction 156). The fluid source 152 may comprise a source of pressurized air, inert gas, or other type of fluid. Actuation or control of the fluid source 152 may be automatically controlled, such as by a controller 153. The controller 153 may be configured similar to exemplary computing devices of the computing system 800 described below with reference to FIG. 12.

In FIG. 1, the fluidization mechanism 150 includes one or more flow channels 160 disposed in the wall 144. For example, in exemplary embodiments, the wall 144 may be configured as a manifold wall having the one or more flow channels 160 extending through the wall 144 from the flow chamber 122 to the support chamber 120. In exemplary embodiments, in operation, the additive manufacturing build 110 is removed from a build box and placed into the support chamber 120. Pressurized fluid provided by the fluid source 152 enters the flow chamber 122 and flows from the flow chamber 122 upwardly through the one or more flow channels 160 into the support chamber 120, as indicated by a flow direction 162. In exemplary embodiments, the flow chamber 122 functions as a plenum chamber to equalize a pressure of the fluid being introduced to the support chamber 120 via the one or more flow channels 160 for a more even distribution of the fluid into the support chamber 120. However, it should be understood that in exemplary embodiments, the fluid source 152 may be fluidically coupled directly to separate ones of the one or more flow channels 160. As will be described in greater detail below, the fluidization mechanism 150 is configured in such a manner where the fluid injected into the support chamber 120 creates a swirling flow of the fluid within the support chamber 120 to fluidize the unbound powder material 114 surrounding the one or more objects 130 within the support chamber 120.

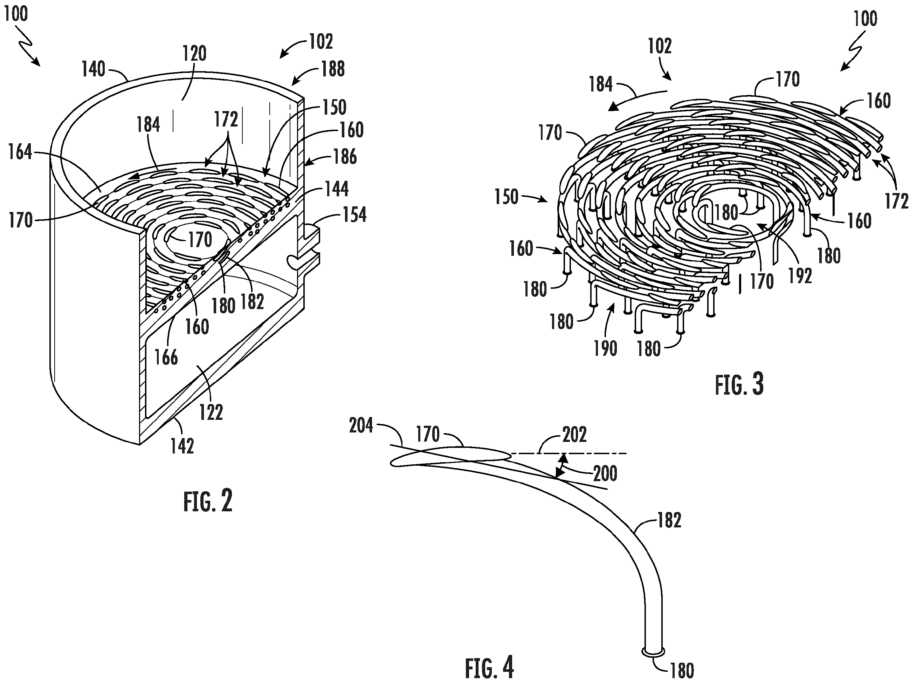

Referring to FIG. 2, FIG. 2 is a schematic diagram depicting a partial, isometric section view of the de-powdering device 102 of FIG. 1 in accordance with exemplary embodiments of the present disclosure. In FIG. 2, the additive manufacturing build 110 (FIG. 1) has been omitted from view to better illustrate and describe the fluidization mechanism 150 of the present disclosure. In the illustrated embodiment, the de-powdering device 102 is configured having a circular geometry. However, as described above, the de-powdering device 102 may be configured having other desired geometries.

As illustrated in FIG. 2, the wall 144 includes the one or more flow channels 160 such that an outlet 170 of each of the one or more flow channels 160 is in fluid communication with the support chamber 120. As described above, in exemplary embodiments, the wall 144 is configured as a manifold wall having a side 164 facing the support chamber 120, and a side 166 opposite the side 164 facing the flow chamber 122. In exemplary embodiments, the wall 144 is configured such that the one or more flow channels 160 include a plurality of concentrically located flow channels 160. For example, as depicted in FIG. 2, the wall 144 includes a plurality of flow channel rings 172 each concentrically spaced apart from each other, where each flow channel ring 172 includes a plurality of spaced apart outlets 170 of the respective flow channels 160. In exemplary embodiments, each flow channel 160 includes an inlet 180 (only one depicted in FIG. 2 due to the section aspect of the view of FIG. 2) in fluid communication with the flow chamber 122 on the side 166 of the wall 144, and a transition portion 182 located downstream of the inlet 180 between the inlet 180 and the outlet 170. The transition portion 182 is configured to change a direction, such as an angular direction, of the fluid flow passing through the respective flow channel 160 such that the fluid flow exits the outlet 170 at a shallow angle measured from a centerline of the flow channel 160 at the outlet 170 with respect to a surface of the side 164 of the wall 144. For example, in exemplary embodiments, the shallow angle is between five degrees (5°) and fifteen degrees (15°) with respect to the surface of the side 164 of the wall 144. In exemplary embodiments, the shallow angle is between seven degrees (7°) and ten degrees (10°) with respect to the surface of the side 164 of the wall 144. In exemplary embodiments, the orientation of the flow channel 160 at least at the outlet 170 (e.g., via the shallow angle of the outlet 170) causes the fluid flow exiting the outlet 170 to cause a swirling flow of the fluid within the support chamber 120, as depicted by the direction 184. Additionally, the shallow angle of the outlet 170 causes the fluid flow exiting the outlet 170 to initially fluidize the powder build material 114 in a lower portion 186 of the support chamber 120 before exiting from an upper portion 188 of the support chamber 120.

In exemplary embodiments, because of the shallow angle of the outlet 170 exiting the wall 144, the outlet 170 comprises an elliptical shape or geometry. For example, in exemplary embodiments, the flow channel 160 may comprise a circular cross section such that as the circular cross section of the flow channel 160 exits the wall 144 at the outlet 170 at a shallow angle, the outlet 170 is an elliptical shape or geometry based on a plane defined by side 164 of the wall 144 intersecting that circular cross section of the flow channel 160. Further, in exemplary embodiments, the outlet 170 comprises a curved or arcuate shape or geometry (e.g., curving in a direction corresponding to a respective flow channel ring 172) to introduce the swirling flow of the fluid into the support chamber 120.

Referring to FIG. 3, FIG. 3 is a schematic diagram depicting a partial, isometric section view of the fluidization mechanism 150 of the de-powdering device 102 of FIGS. 1 and 2 in accordance with exemplary embodiments of the present disclosure. In FIG. 3, the flow channels 160 are depicted without the wall 144, and FIG. 4 depicts one exemplary flow channel 160 without the wall 144. In FIG. 3, various portions of the de-powdering device 102 (FIGS. 1 and 2) have been omitted from view to better illustrate and describe the flow channels 160 of the present disclosure. As depicted in FIG. 3, the flow channels 160 are arranged concentrically forming the respective flow channel rings 172, and each flow channel 160 includes the inlet 180, the outlet 170 in fluid communication with a respective inlet 180, and the transition portion 182 fluidly connecting the inlet 180 with the outlet 170. As depicted in FIG. 3, the flow channels 160 form a concentric array 190 of the flow channels 160 such that the fluid exiting the respective flow channels 160 creates a swirling fluid flow (e.g., in the illustrated embodiment, counterclockwise in the direction 184). The concentrically-arranged flow channels 160 of the illustrated embodiment also create a negative pressure gradient towards a center or central area 192 of the array 190 that functions to maintain the powder build material (FIG. 1) within the de-powdering device 102. The array 190 of the flow channels 160 also functions to even the fluid pressure before reaching the support chamber 120 (FIG. 1).

Referring to FIG. 4, FIG. 4 is a schematic diagram depicting an isometric view of at least one of the flow channels 160 of the fluidization mechanism 150 of FIGS. 1-3 in accordance with exemplary embodiments of the present disclosure. As depicted in FIG. 4, the flow channel comprises the inlet 180, the outlet 170 in fluid communication with the inlet 180, and the transition portion 182 fluidly connecting the inlet 180 with the outlet 170. In the illustrated embodiment, the inlet 180 may be configured in a vertical orientation (e.g., perpendicular to the wall 144 (FIG. 2), and the transition portion 182 changes or alters a fluid flow direction between the inlet 180 and the outlet 170 such that the fluid flow is discharged or injected from the outlet 170 at a shallow angle 200. In FIG. 4, the shallow angle 200 is defined with respect to a surface corresponding to the side 164 (FIG. 2) of the wall (FIG. 2), depicted in FIG. 4 as a phantom line 202, and a centerline 204 of the flow channel 160 at the outlet 170. As described above, in exemplary embodiments, the shallow angle 200 is between five degrees (5°) and fifteen degrees (15°). In exemplary embodiments, the shallow angle 200 is between seven degrees (7°) and ten degrees (10°). Thus, in exemplary embodiments, the fluid flow is discharged or injected from the outlet 170 nearly horizontal or in nearly a planar relationship with respect to the line 202.

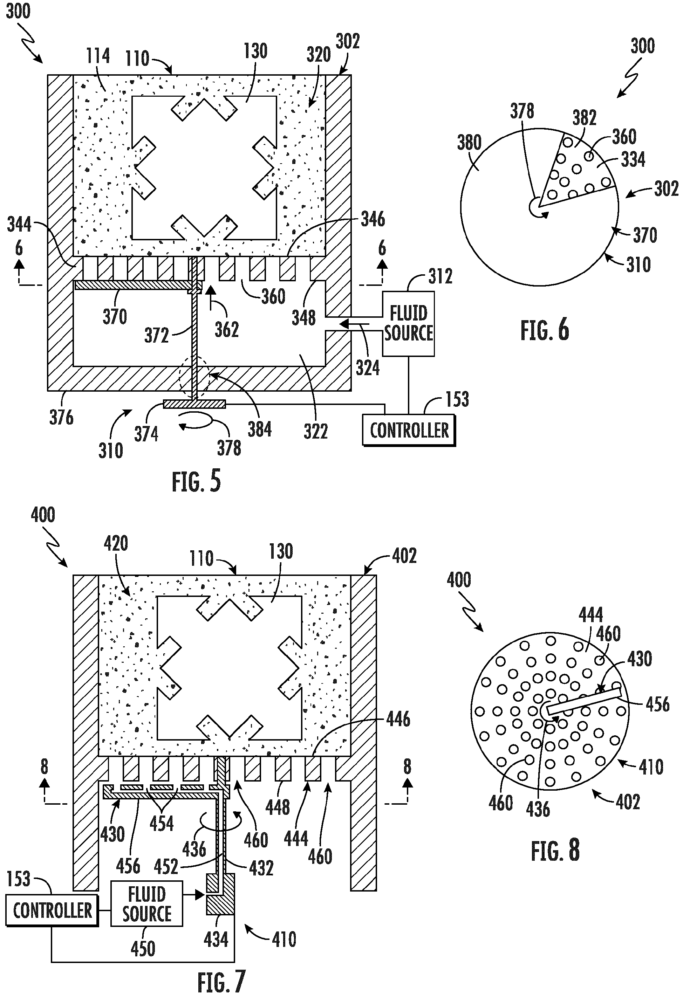

Referring to FIG. 5, FIG. 5 schematically depicts a de-powdering system 300 in accordance with another exemplary embodiment of the present disclosure. In the illustrated embodiment, the de-powdering system 300 includes a de-powdering device 302 configured to receive and support the additive manufacturing build 110 having the one or more three-dimensional objects 130 suspended within the powder build material 114. The de-powdering device 302 may be configured similarly to the de-powdering device 102 (FIGS. 1 and 2) including a support chamber 320 and a flow chamber 322.

In exemplary embodiments, the de-powdering system 300 also comprises a fluidization mechanism 310 configured to inject a fluid into the support chamber 320 to fluidize the unbound powder build material 114 surrounding the one or more objects 130. In exemplary embodiments, a fluid source 312 is fluidly coupled or couplable to the flow chamber 322. The fluid source 312 may comprise a pressurized fluid source 312 configured to inject or otherwise provide a pressurized fluid into the flow chamber 322 (e.g., in a flow direction 324). The fluid source 312 may comprise a source of pressurized air or other type of fluid. Actuation or control of the fluid source 312 may be automatically controlled, such as by the controller 153.

In FIG. 5, the flow chamber 322 also comprises a wall 344 (similar to the wall 144 (FIG. 1)) disposed contiguously with the support chamber 320 and the flow chamber 322 (e.g., having a side 346 facing the support chamber 320 and a side 348 opposite the side 346 facing the flow chamber 322). The wall 344 may also be configured as a manifold wall 344 having one or more flow channels 360 extending through the wall 344 from the flow chamber 322 to the support chamber 320. Pressurized fluid provided by the fluid source 312 enters the flow chamber 322 and flows from the flow chamber 322 upwardly through the one or more flow channels 360 into the support chamber 320, as indicated by a flow direction 362. In the illustrated embodiment, the one or more flow channels 360 are oriented perpendicular to at least one of the sides 346 or 348. However, it should be understood that one or more of the flow channels 360 may be angled or oriented differently. For example, the one or more flow channels 360 could be configured similar to the flow channels 160 (FIGS. 1-3).

In exemplary embodiments, the fluidization mechanism 310 is configured in such a manner where the fluid injected into the support chamber 320 creates a swirling flow of the fluid within the support chamber 320 to fluidize the unbound powder material 114 within the support chamber 320. In the embodiment illustrated in FIG. 5, the fluidization mechanism 310 includes a shield plate 370. The shield plate 370 is coupled to a shaft 372, and the shaft is coupled to an actuator 374. In the illustrated embodiment, the shaft 372 extends vertically through a bottom wall 376 of the de-powdering device 302 defining a lower boundary of the fluid chamber 322. The actuator 374 is configured to impart rotational movement to the shaft 372 (e.g., in a rotary direction 378) to correspondingly cause rotation of the shield plate 370 within the flow chamber 322. In exemplary embodiments, a rotary shaft seal 384 provides a seal about the shaft 372 extending through the bottom wall 376. As will be described in further detail below, the rotation of the shield plate 370 within the flow chamber 322 causes the fluid flow injected into the support chamber 320 from the flow chamber 322 to create a swirling flow of the fluid within the support chamber 320. Actuation or control of the actuator 374 may be automatically controlled, such as by the controller 153.

Referring to FIG. 6, FIG. 6 is a schematic diagram depicting a portion of the de-powdering device 302 of FIG. 5 taken along the line 6-6 of FIG. 5. In the illustrated embodiment, the shield plate 370 includes a solid portion 380 and an open portion 382. The solid portion 380 is sized and configured to intermittently block or obstruct the fluid flow from entering or passing through one or more of the flow channels 360 as the shield plate 370 rotates within the flow chamber 322 (FIG. 5). Correspondingly, the open portion 382 is sized and configured to intermittently expose one or more of the flow channels 360 to allow the fluid flow to enter and pass through the exposed flow channels 360. Thus, in operation, as the shield plate 370 rotates in the direction 378, the open portion 382 rotates about the flow chamber 322 (FIG. 5), thereby causing certain ones of the flow channels 360 to be intermittently exposed to pressurized fluid within the flow chamber 322 (FIG. 5) in a circular manner. Thus, the fluid flow enters the support chamber 320 (FIG. 5) from the flow chamber 322 (FIG. 5) in a swirling manner to create a swirling fluid flow within the support chamber 320 (FIG. 5). In the illustrated embodiment, the one or more flow channels 360 are also concentrically arranged in the wall 344. However, it should be understood that the one or more flow channels 360 may be otherwise geometrically arranged.

Referring to FIG. 7, FIG. 7 schematically depicts a de-powdering system 400 in accordance with another exemplary embodiment of the present disclosure. In the illustrated embodiment, the de-powdering system 400 includes a de-powdering device 402 configured to receive and support the additive manufacturing build 110 having the one or more three-dimensional objects 130 suspended within the powder build material 114. The de-powdering device 402 may be configured similarly to the de-powdering device 102 (FIGS. 1 and 2) or the de-powdering device 302 (FIG. 5) including a support chamber 420 for containing the additive manufacturing build 110. The de-powdering device 402 also includes a wall 444 (similar to the wall 144 (FIG. 1) or the wall 344 (FIG. 5)) disposed contiguously with the support chamber 420 (e.g., having a side 446 facing the support chamber 420 and a side 448 opposite the side 446). The wall 444 may also be configured as a manifold wall having one or more flow channels 460 extending through the wall 444 from the side 448 to the support chamber 420. In the illustrated embodiment, the one or more flow channels 460 are oriented perpendicular to at least one of the sides 446 or 448. However, it should be understood that one or more of the flow channels 460 may be angled or oriented differently. For example, the one or more flow channels 460 could be configured similar to the flow channels 160 (FIGS. 1-3).

In exemplary embodiments, the de-powdering system 400 also comprises a fluidization mechanism 410 configured to inject a fluid into the support chamber 420 to fluidize the unbound powder build material 114 surrounding the one or more objects 130. In exemplary embodiments, the fluidization mechanism 410 includes a nozzle 430 coupled to a shaft 432. The shaft 432 is coupled to an actuator 434 configured to impart rotational movement to the shaft 432 (e.g., in a rotary direction 436) to correspondingly cause rotation of the nozzle 430 with respect to the wall 444. A fluid source 450 is fluidly coupled to the nozzle 430 via the shaft 432. For example, in the illustrated embodiment, the shaft 432 includes an internal passageway 452 configured to deliver or transfer a pressurized fluid from the fluid source 450 to the nozzle 430. In exemplary embodiments, the nozzle 430 includes an arm 456 extending laterally outward from the shaft 432 in an orientation parallel to the wall 444. The arm 456 includes one or more orifices or apertures 454 disposed in a direction facing the side 448 of the wall 444 (or facing in the direction of the flow channels 460 and the support chamber 420) fluidically coupled to the passageway 452. Actuation or control of the fluid source 450, the actuator 434, or both, may be automatically controlled, such as by the controller 153.

Referring to FIG. 8, FIG. 8 is a schematic diagram depicting a portion of the de-powdering device 402 of FIG. 7 taken along the line 8-8 of FIG. 7. In the illustrated embodiment, in operation, as the nozzle 430 rotates in the direction 436, pressurized fluid is ejected from the apertures 454 (FIG. 7) of the nozzle 430 toward the flow channels 460 and is injected into the support chamber 420 (FIG. 7) through certain ones of the flow channels 460 in a rotational manner. Thus, the fluid flow enters the support chamber 420 (FIG. 7) in a swirling manner to create a swirling fluid flow within the support chamber 420 (FIG. 7). In the illustrated embodiment, the one or more flow channels 460 are also concentrically arranged in the wall 444. However, it should be understood that the one or more flow channels 460 may be otherwise geometrically arranged.

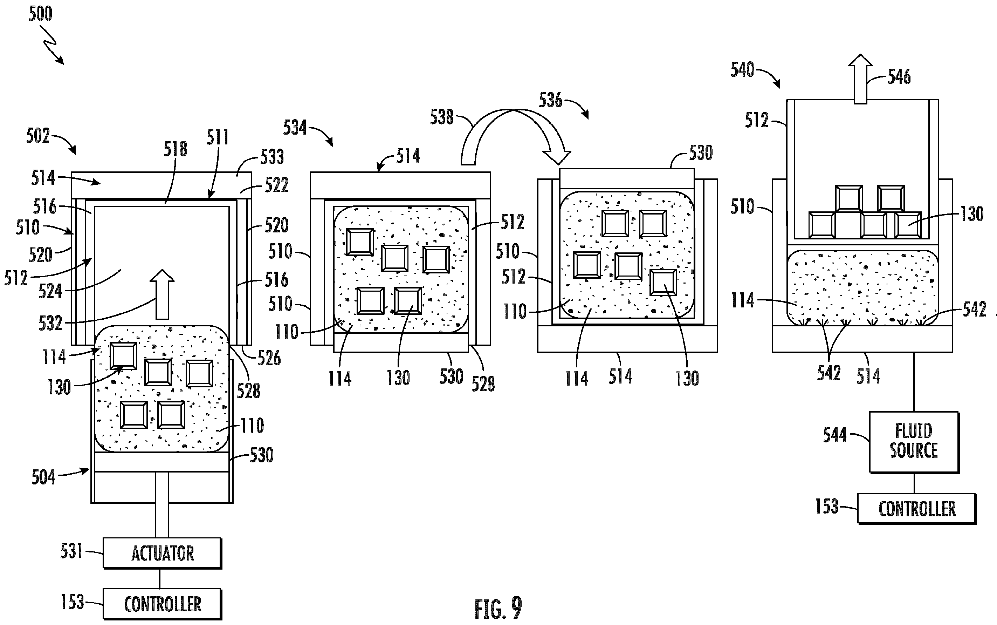

Referring to FIG. 9, FIG. 9 is a schematic diagram depicting a de-powdering process with another de-powdering system 500 according to exemplary embodiments of the present disclosure. The de-powdering system 500 may be constructed or used similarly to the de-powdering system 100 (FIGS. 1-3), the de-powdering system 300 (FIGS. 5 and 6), or the de-powdering system 400 (FIGS. 7 and 8). In the illustrated embodiment, at a stage 502 of a de-powdering process, the additive manufacturing build 110 having one or more of the three-dimensional parts objects 130 suspended or disposed within the powder build material 114 is initially disposed in a build box 504. In the illustrated embodiment, the de-powdering system 500 includes an enclosure 510, a sieve structure 511, and a fluidization mechanism 514. The fluidization mechanism 514 may include the fluidization mechanism 150 (FIGS. 1-4), the fluidization mechanism 310 (FIGS. 5 and 6), or the fluidization mechanism 410 (FIGS. 7 and 8). The enclosure 510 may be the support chamber 120 (FIGS. 1 and 2), the support chamber 320 (FIG. 5), or the support chamber 420 (FIG. 7). In FIG. 7, the enclosure 510 includes one or more sidewalls 520, and the fluidization mechanism 514 is coupled to the enclosure 510 to close the enclosure 510. The sidewalls 520 and the fluidization mechanism 514 define a cavity 524 within the enclosure 510. The sieve structure 511 may comprise a mesh structure or a wall structure containing a plurality of opening or apertures to enable the powder build material 114 to flow therethrough. In the illustrated embodiment, the sieve structure 511 comprises a sieve basket 512 having one or more sidewalls 516 and an endwall 518. In exemplary embodiments, the sidewalls 516 and the endwall 518 may comprise a mesh structure or a wall structure containing a plurality of openings or apertures to enable the powder build material 114 to flow therethrough. The sieve basket 512 is sized to fit within the enclosure 510 in the cavity 524.

At the stage 502, a build plate 530 is moved upwardly via actuation of an actuator 531 in a direction 532 to raise or insert the additive manufacturing build 110 into the enclosure 510 and the sieve basket 512. For example, at the stage 502, an end 526 of the enclosure 510 and an end 528 of the sieve basket 512 are open and facing downwardly such that the additive manufacturing build 110 may be moved upwardly in the direction 532 into the enclosure 510 and the sieve basket 512 such that the additive manufacturing build 110 is disposed within the cavity 524 and inside the sieve basket 512. As will be described further below, the fluidization mechanism 514 may comprise a manifold 533 or other type structure having one or more fluid injection ports that are fluidically coupled to a fluid source such that a fluid from the fluid source may be injected into the additive manufacturing build 110 to fluidize the unbound powder build material 114. Actuation or control of the actuator 531 may be automatically controlled, such as by the controller 153.

At a stage 534 of the de-powdering process, the build plate 530 is secured to the end 528 of the sieve basket 512 to seal or close the end 528 of the sieve basket 512. It should be understood that instead of the build plate 530, another type of lid or cover may be secured to the end 528 of the sieve basket 512 to seal or close the end 528 of the sieve basket 512. At the stage 534, the fluidization mechanism 514 is disposed above the additive manufacturing build 110. At a stage 536 of the de-powdering process, the enclosure 510, the sieve basket 512, the fluidization mechanism 514, and the build plate 530 are together inverted, as depicted by the arrow 538, such that the fluidization mechanism 514 is positioned below the additive manufacturing build 110. The enclosure 510, the sieve basket 512, the fluidization mechanism 514, and the build plate 530 may be together inverted manually or via a mechanism or actuator controlled by a controller, such as the controller 153.

At a stage 540 of the de-powdering process, the build plate 530 is removed from the sieve basket 512. As described above, the fluidization mechanism 514 includes one or more fluid injection ports 542 that are fluidically coupled to a fluid source 544 such that a fluid from the fluid source 544 may be injected into the additive manufacturing build 110 to fluidize the unbound powder build material 114. For example, the fluid source 544 may comprise a source of pressurized fluid such that actuation of the fluid source causes the pressurized fluid to be injected into the additive manufacturing build 110 to fluidize the unbound powder build material 114. The sieve basket 512 may be lifted or raised in a direction 546 to remove the sieve basket 512 from the enclosure 510. The fluidized unbound powder build material 114 drains out of the sieve basket 512 and remains within the enclosure 510. Correspondingly, the objects 130 remain within the sieve basket 512 as the sieve basket 512 is lifted out of the enclosure 510. The unbound powder material 114 may be collected from the enclosure 510. Actuation or control of the fluid source 544 may be automatically controlled, such as by the controller 153.

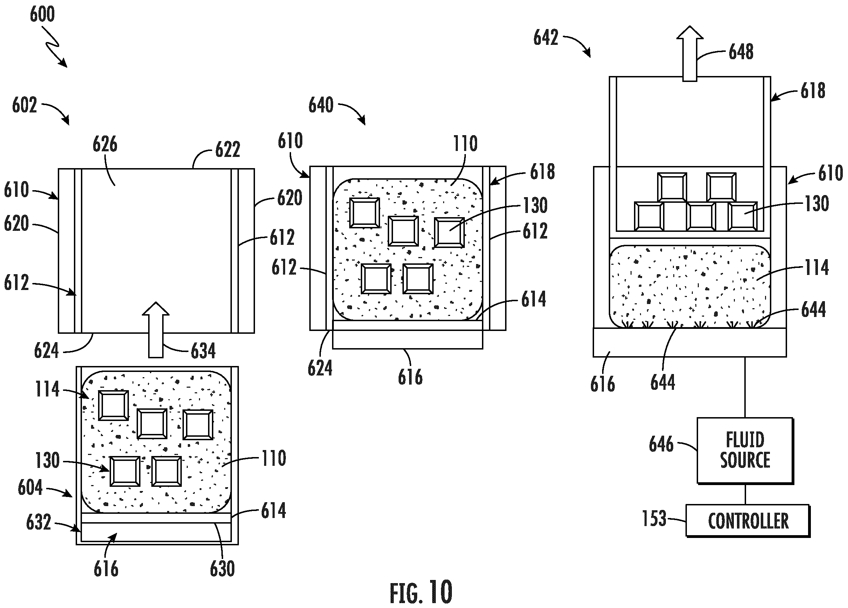

Referring to FIG. 10, FIG. 10 is a schematic diagram depicting another de-powdering system 600 according to exemplary embodiments of the present disclosure. The de-powdering system 600 may be constructed or used similarly to the de-powdering system 100 (FIGS. 1-3), the de-powdering system 300 (FIGS. 5 and 6), the de-powdering system 400 (FIGS. 7 and 8), or the de-powdering system 500 (FIG. 9). In the illustrated embodiment, at a stage 602 of a de-powdering process, the additive manufacturing build 110 having one or more of the three-dimensional parts objects 130 suspended within the powder build material 114 is initially disposed in a build box 604. In the illustrated embodiment, the de-powdering system 600 includes a sleeve 610, one or more sieve sidewalls 612, a sieve endwall 614, and a fluidization mechanism 616. The fluidization mechanism 616 may include the fluidization mechanism 150 (FIGS. 1-4), the fluidization mechanism 310 (FIGS. 5 and 6), or the fluidization mechanism 410 (FIGS. 7 and 8).

The sleeve 610 includes one or more sidewalls 620 defining an open end 622 and an open end 624 opposite the end 622 of the sleeve 610. The sidewalls 620 define a cavity 626 within the sleeve 610. The one or more sieve sidewalls 612 are disposed within the cavity 626, and the one or more sieve sidewalls 612 may form a sieve structure such as a sieve sleeve. The sieve endwall 614 is disposed on a top side 630 of the fluidization mechanism 616. In exemplary embodiments, the sieve sidewalls 612 and the sieve endwall 614 may comprise a mesh structure or a wall structure containing a plurality of opening or apertures to enable the powder build material 114 to flow therethrough when agitated or fluidized but be a fine mesh or have relatively small perforations such that the base layer of the additive manufacturing build 110 may be formed without the power build material 114 passing through the mesh structure, or at least without a significant amount of the power build material 114 passing through the mesh structure. In exemplary embodiments, the fluidization mechanism 616 and the sieve endwall 614 form a build plate 632 that is movable within the build box 604 to facilitate the layerwise additive manufacturing of the one or more objects 130 within the build box 604.

At the stage 602, the build plate 632 (i.e., the fluidization mechanism 616 and the sieve endwall 614) is moved upwardly in a direction 634 (e.g., via actuation of an actuator, such as the actuator 531 (FIG. 9)) to raise or insert the additive manufacturing build 110 into the sleeve 610. For example, at the stage 502, the end 624 of the sleeve 610 is open and facing downwardly such that the additive manufacturing build 110 may be moved upwardly in the direction 634 into the sleeve 610 such that the additive manufacturing build 110 is disposed within the cavity 626 and inside or between the sieve sidewalls 612. As will be described further below, the fluidization mechanism 616 may be configured similarly to the fluidization mechanism 514 (FIG 9) having one or more fluid injection ports that are fluidically coupled to a fluid source such that a fluid from the fluid source may be injected into the additive manufacturing build 110 to fluidize the unbound powder build material 114.

At a stage 640 of the de-powdering process, the sieve endwall 614 is secured to the sieve sidewalls 612 so that the sieve sidewalls 612 and the sieve endwall 614 form a sieve basket 618 that is moveable with respect to the sleeve 610 (e.g., the sieve sidewalls 612 and the sieve endwall 614 secured together and moveable as a single unit). For example, in exemplary embodiments, the sieve endwall 614 may be temporarily coupled to the fluidization mechanism 616 during an additive manufacturing printing process (i.e., functioning as part of the build plate 632) and, after insertion of the additive manufacturing build 110 into the sleeve 610, the sieve endwall 614 may be released from the fluidization mechanism 616 and secured to the sieve sidewalls 612. Additionally, securing the fluidization mechanism 616 to the sleeve 610 closes the end 624 of the sleeve 610.

At a stage 642 of the de-powdering process, the fluidization mechanism 616 is actuated to fluidize the unbound powder build material 114 of the additive manufacturing build 110. For example, as described above, the fluidization mechanism 616 includes one or more fluid injection ports 644 that are fluidically coupled to a fluid source 646 such that a fluid from the fluid source 646 may be injected into the additive manufacturing build 110 to fluidize the unbound powder build material 114. For example, the fluid source 646 may comprise a source of pressurized fluid such that actuation of the fluid source 646 causes the pressurized fluid to be injected into the additive manufacturing build 110 to fluidize the unbound powder build material 114. The sieve basket 618 may be lifted or raised in a direction 648 to remove the sieve basket 618 from the sleeve 610. The fluidized unbound powder build material 114 drains out of the sieve basket 618 and remains within the sleeve 610. Correspondingly, the objects 130 remain within the sieve basket 618 as the sieve basket 618 is lifted out of the sleeve 610. The unbound powder material 114 may be collected from the sleeve 610. Actuation or control of the fluid source 646 may be automatically controlled, such as by the controller 153.

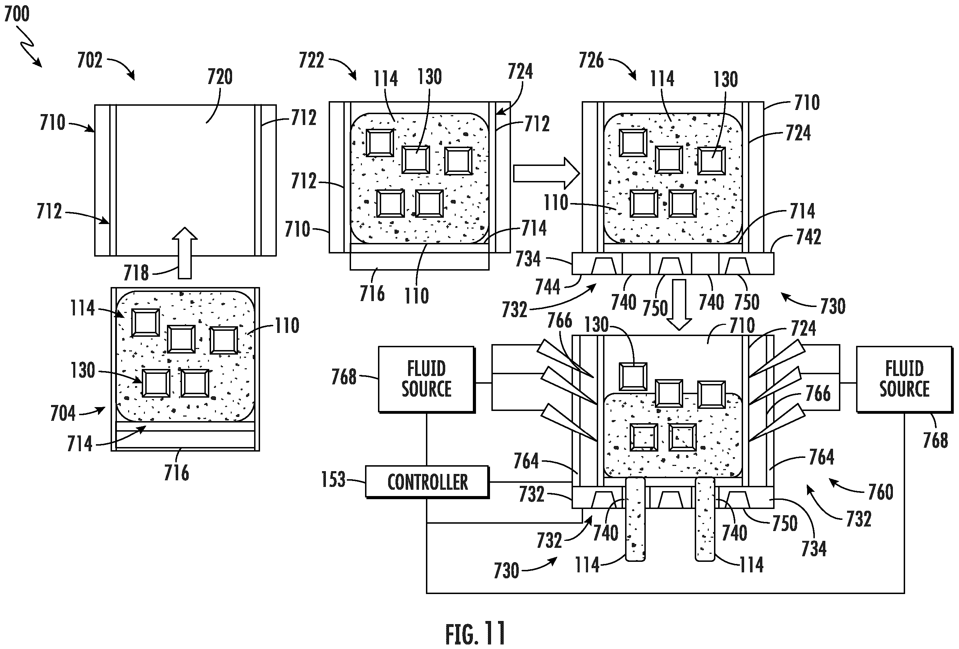

Referring to FIG. 11, FIG. 11 is a schematic diagram depicting another de-powdering process using another de-powdering system 700 according to exemplary embodiments of the present disclosure. In the illustrated embodiment, at a stage 702 of a de-powdering process, the additive manufacturing build 110 having one or more of the three-dimensional parts objects 130 suspended within the powder build material 114 is initially disposed in a build box 704. In the illustrated embodiment, the de-powdering system 700 includes a sleeve 710, one or more sieve sidewalls 712, a sieve endwall 714, and a build plate 716. The sleeve 710 may be configured similarly to the sleeve 610 (FIG. 9), the sieve sidewalls 712 and the sieve endwall 714 may be configured similarly to the sieve sidewalls 612 (FIG. 9) and the sieve endwall 614 (FIG. 9), respectively. In exemplary embodiments, the build plate 716 is movable within the build box 704 to facilitate the layerwise additive manufacturing of the one or more objects 130 within the build box 704.

At the stage 702, the build plate 716 is moved upwardly in a direction 718 (e.g., via actuation of an actuator, such as the actuator 531 (FIG. 9)) to raise or insert the additive manufacturing build 110 into the sleeve 710 (similar to as described in connection with FIG. 9 above) so that the additive manufacturing build 110 is disposed within a cavity 720 defined by the sleeve 710. At a stage 722 of the de-powdering process, the sieve endwall 714 is secured to the sieve sidewalls 712 so that the sieve sidewalls 12 and the sieve endwall 714 form a sieve basket 724 that is moveable with respect to the sleeve 710 (e.g., the sieve sidewalls 712 and the sieve endwall 714 secured together and moveable as a single unit).

At a stage 726 of the de-powdering process, the sleeve710 and the sieve basket 724 with the additive manufacturing build 110 therein are transferred from the build plate 716 to a de-powdering station 730 of the de-powdering system 700. The de-powdering station 730 includes one or more a fluidization mechanism 732. In exemplary embodiments, the sleeve 710 and the sieve basket 724 with the additive manufacturing build 110 therein are positioned on or coupled to a plate 734 such that the sieve endwall 714 is disposed against or proximate to the plate 734. In exemplary embodiments, the plate 734 includes one or more flow channels 740 extending from a top side 742 of the plate 734 facing the sieve endwall 714 to a bottom side 744 of the plate 734 opposite the top side 742. In exemplary embodiments, the de-powdering system 700 one or more fluidization mechanisms 732 to fluidize unbound portions of the powder build material 114. In exemplary embodiments, the one or more fluidization mechanisms 732 may include one or more vibration mechanisms 750 coupled or couplable to the plate 734. The one or more vibration mechanisms 750 are configured to induce vibrations into the additive manufacturing build 110 to fluidize the unbound powder build material 114. In exemplary embodiments, the one or more vibration mechanisms 750 may include one or more ultrasonic transducers to induce vibrations into the additive manufacturing build 110. However, it should be understood that the one or more vibration mechanisms 750 may alternatively or additionally include pneumatic transducers or other types of contact or non-contact vibration inducing mechanisms. Actuation or control of the fluidization mechanism 732, such as the one or more vibration mechanisms 750, may be automatically controlled, such as by the controller 153.

At a stage 760 of the de-powdering process, the one or more vibration mechanisms 750 are actuated to fluidize the unbound powder build material 114. In the illustrated embodiment, the one or more fluidization mechanisms 732 may also include one or more fluidization manifolds 764 each having one or more fluid injection ports 766 that are fluidically coupled to one or more fluid sources 768 such that a fluid from the fluid sources 768 may be injected into the additive manufacturing build 110 to fluidize the unbound powder build material 114. The one or more fluidization manifolds 764 may be used in addition or alternatively to the one or more vibration mechanisms 750. For example, the fluid sources 768 may comprise a source of pressurized fluid such that actuation of the fluid sources 768 causes the pressurized fluid to be injected into the additive manufacturing build 110 to fluidize the unbound powder build material 114. The fluidized unbound powder build material 114 drains out of the sleeve 710 and the sieve basket 724 through the one or more flow channels 740. Correspondingly, the objects 130 remain within the sieve basket 724. The unbound powder material 114 may be collected that drains through the flow channels 740. Actuation or control of the one or more fluid sources 768 may be automatically controlled, such as by the controller 153.

FIG. 12 provides an example computing system 800 according to example embodiments of the present disclosure. The computing devices or elements described herein, such as the controller 153, may include various components and perform various functions of the computing system 800 described below, for example.

As shown in FIG. 12, the computing system 800 can include one or more computing device(s) 802. The computing device(s) 802 can include one or more processor(s) 802A and one or more memory device(s) 802B. The one or more processor(s) 802A can include any suitable processing device, such as a microprocessor, microcontroller, integrated circuit, logic device, and/or other suitable processing device. The one or more memory device(s) 802B can include one or more computer-executable or computer-readable media, including, but not limited to, non-transitory computer-readable media, RAM, ROM, hard drives, flash drives, and/or other memory devices.

The one or more memory device(s) 802B can store information accessible by the one or more processor(s) 802A, including computer-readable instructions 802C that can be executed by the one or more processor(s) 802A. The instructions 802C can be any set of instructions that when executed by the one or more processor(s) 802A, cause the one or more processor(s) 802A to perform operations. In some embodiments, the instructions 802C can be executed by the one or more processor(s) 802A to cause the one or more processor(s) 802A to perform operations, such as any of the operations and functions for which the computing system 800 and/or the computing device(s) 802 are configured, such as controlling operation or actuation of the fluid sources 152, 312, 450, 544, 646, or 768, the actuators 374, 434, and 531, and the fluidization mechanisms 732, or other components of the de-powdering systems 100, 300, 400, 500, 600, and 700. The instructions 802C can be software written in any suitable programming language or can be implemented in hardware. Additionally, and/or alternatively, the instructions 802C can be executed in logically and/or virtually separate threads on processor(s) 802A. The memory device(s) 802B can further store data 802D that can be accessed by the processor(s) 802A. For example, the data 802D can include models, lookup tables, databases, etc.

The computing device(s) 802 can also include a network interface 802E used to communicate, for example, with the other components of the computing system 800 (e.g., via a communication network). The network interface 802E can include any suitable components for interfacing with one or more network(s), including for example, transmitters, receivers, ports, controllers, antennas, and/or other suitable components. One or more devices can be configured to receive one or more commands from the computing device(s) 802 or provide one or more commands to the computing device(s) 802.

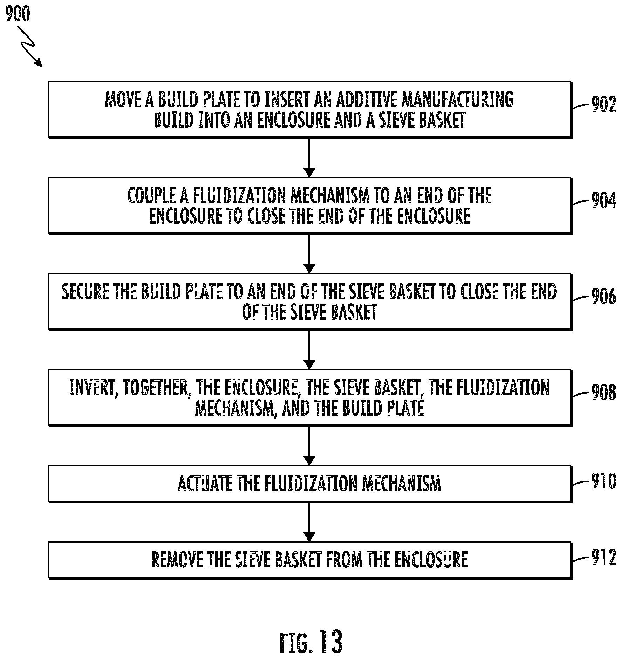

Referring to FIG. 13, a flow diagram depicting an exemplary method 900 of de-powdering of the additive manufacturing build 110 is provided. The method 900 begins at 902, where the build plate 530 is moved, via an actuator 531, to insert the additive manufacturing build 110 into the enclosure 510 and the sieve basket 512. At 904, the fluidization mechanism 514 is coupled to the enclosure 510 to close the enclosure 510. At 906, the build plate 530 is secured to the end 528 of the sieve basket 512 to close the end 528 of the sieve basket 512. At 908, the enclosure 510, the sieve basket 512, the fluidization mechanism 514, and the build plate 530 are, together, inverted. At 910, the build plate 530 is removed from the sieve basket 512. At 912, the fluidization mechanism 514 is actuated to fluidize the powder build material 114. At 914, the sieve basket 512 is removed from the enclosure 510, wherein at least a portion of the powder build material 114 drains out of the sieve basket 512 and remains within the enclosure 510.

Thus, embodiments of the present disclosure provide an apparatus and technique for de-powdering of an additively manufactured three-dimensional object. In exemplary embodiments, the de-powdering apparatus includes a support chamber supporting an additive manufacturing build. The de-powdering apparatus also includes a fluidization mechanism for injecting fluid into the support chamber to fluidize the unbound powder material. The fluid is injected into the support chamber in such a manner to create a swirling fluid flow within the support chamber. The swirling fluid flow fluidizes the packed powder build material inside the support chamber and generates a negative pressure towards the center of the support chamber that keeps powder build material inside the support chamber. Embodiments of the present disclosure provide a fluidization mechanism that has a reduced requirement on flow rate, thereby lowering the risk of green body damage. The fluidized powder build material within the support chamber can be easily evacuated/vacuumed from the support chamber leaving the green-bodies de-powdered.

Further aspects of the presently disclosed subject matter are provided by the following clauses:
A de-powdering system, comprising: one or more sidewalls defining a support chamber configured to contain an additive manufacturing build, wherein the additive manufacturing build includes one or more objects disposed within a powder build material; and a fluidization mechanism fluidically couplable to a fluid source, and wherein the fluidization mechanism includes one or more flow channels fluidically coupled to the support chamber, and wherein the fluid source is actuatable to provide a fluid from the fluid source to the support chamber and inject the fluid into the support chamber via the one or more flow channels, the one or more flow channels oriented to introduce a swirling flow of the fluid into the support chamber to fluidize at least a portion of the powder build material within the support chamber.

The de-powdering system of the preceding clause, wherein the support chamber includes a wall defining a lower boundary of the support chamber, and wherein the one or more flow channels extend through the wall.

The de-powdering system of any preceding clause, wherein the fluidization mechanism comprises a shield plate, the shield plate being movable to obstruct at least a portion of the one or more flow channels.

The de-powdering system of any preceding clause, wherein the fluidization mechanism comprises: a shield plate having at least one solid portion and at least one open portion, wherein the at least one open portion enables passage of the fluid to the support chamber; and an actuator actuatable to move the shield plate with respect to the support chamber.

The de-powdering system of any preceding clause, wherein the fluidization mechanism comprises a nozzle fluidically couplable to the fluid source, wherein the nozzle is movable to inject the fluid into the support chamber.

The de-powdering system of any preceding clause, wherein the fluidization mechanism comprises: a nozzle fluidically couplable to the fluid source, wherein the nozzle comprises an arm having one or more apertures; and an actuator actuatable to move the nozzle with respect to the support chamber.

The de-powdering system of any preceding clause, wherein the one or more flow channels comprises a plurality of concentrically located flow channels.

The de-powdering system of any preceding clause, wherein at least one of the one or more flow channels comprises: an inlet disposed in fluid communication with the fluid source; an outlet disposed in fluid communication with the support chamber and located downstream of the inlet; and a transition portion extending from the inlet to the outlet, wherein the transition portion changes an angular direction of a flow of the fluid through the at least one of the one or more flow channels.

The de-powdering system of any preceding clause, wherein the outlet is disposed at between five degrees (5°) and fifteen degrees (15°) with respect to a side of a wall facing the support chamber.

A de-powdering system, comprising: one or more sidewalls defining a support chamber configured to contain an additive manufacturing build, wherein the additive manufacturing build includes one or more objects disposed within a powder build material, and wherein the one or more sidewalls further define a flow chamber, wherein the flow chamber comprises at least one wall disposed contiguously with the support chamber; and a fluidization mechanism fluidically couplable to a fluid source, and wherein the fluidization mechanism includes one or more flow channels extending through the at least one wall fluidically coupling the flow chamber with the support chamber, and wherein the fluid source is actuatable to provide a fluid from the fluid source to the flow chamber and inject the fluid into the support chamber from the flow chamber via the one or more flow channels to induce a swirling flow of the fluid within the support chamber to fluidize at least a portion of the powder build material within the support chamber.

A de-powdering system for additively manufactured objects, comprising: one or more sidewalls defining a support chamber, the support chamber configured to contain an additive manufacturing build, wherein the additive manufacturing build includes one or more objects disposed within a powder build material; wherein the one or more sidewalls further define a flow chamber fluidically couplable to a fluid source, the fluid source actuatable to provide a fluid to the flow chamber; and a manifold wall disposed between the support chamber and the flow chamber, wherein the manifold wall comprises a first side facing the support chamber and a second side, the second side opposite the first side and facing the flow chamber, wherein the manifold wall comprises one or more flow channels extending from the first side to the second side, wherein at least one of the one or more flow channels comprises an outlet that exits the first side at a shallow angle with respect to the first side, wherein fluid is injectable into the support chamber from the flow chamber via the one or more flow channels to induce a swirling flow of the fluid within the support chamber to fluidize unbound powder build material within the support chamber.

The de-powdering system of any preceding clause, wherein the one or more flow channels comprise a plurality of concentrically located flow channels.

The de-powdering system of any preceding clause, wherein the at least one of the one or more flow channels comprises: an inlet disposed in fluid communication with the flow chamber; the outlet disposed in fluid communication with the support chamber and located downstream of the inlet; and a transition portion extending through at least a portion the manifold wall from the inlet to the outlet, wherein the transition portion changes an angular direction of a flow of the fluid through the at least one of the one or more flow channels.

The de-powdering system of any preceding clause, wherein the outlet comprises a curved outlet.

The de-powdering system of any preceding clause, wherein the outlet comprises an elliptical outlet.

A de-powdering system, comprising: an enclosure having one or more sidewalls defining a cavity; a sieve structure positionable within the cavity; an actuator actuatable to move an additive manufacturing build into the enclosure and into the sieve structure, the additive manufacturing build including one or more objects disposed within a powder build material; and a fluidization mechanism fluidically couplable to a fluid source and the sieve structure, the fluid source actuatable to inject a fluid into the additive manufacturing build via the fluidization mechanism to fluidize unbound portions of the powder build material, wherein the unbound portion of the powder build material passes through the sieve structure and away from the one or more objects.

The de-powdering system of any preceding clause, wherein the fluidization mechanism comprises a build plate used to support the additive manufacturing build during printing of the additive manufacturing build.

The de-powdering system of any preceding clause, wherein the sieve structure comprises a sieve basket.

The de-powdering system of any preceding clause, wherein the sieve basket is movably disposed within the enclosure such that the sieve basket is removable from the enclosure while containing the one or more objects and the unbound portion of powder build material remains within the enclosure.

The de-powdering system of any preceding clause, wherein the fluidization mechanism comprises one or more flow channels to enable the unbound portion of the powder build material to flow through the one or more flow channels.

The de-powdering system of any preceding clause, wherein the fluidization mechanism comprises one or more vibration mechanisms, the one or more vibration mechanisms actuatable to induce vibrations into the additive manufacturing build.

A de-powdering system, comprising: a support chamber defined by one or more sidewalls to contain an additive manufacturing build, wherein the additive manufacturing build includes one or more objects disposed within a powder build material; and a flow chamber fluidically couplable to a fluid source, the fluid source actuatable to provide a fluid to the flow chamber, wherein the flow chamber comprises at least one wall disposed contiguously with the support chamber, wherein the at least one wall comprises one or more flow channels; at least one fluidization mechanism disposed within the flow chamber; and an actuator configured to rotate the at least one fluidization mechanism within the flow chamber, wherein the at least one fluidization mechanism causes the fluid to be injected into the support chamber via the one or more flow channels to induce a swirling flow of the fluid within the support chamber to fluidize the unbound powder build material within the support chamber.

The de-powdering system of any preceding clause, wherein the at least one fluidization mechanism comprises a nozzle fluidly connected to the fluid source.

The de-powdering system of any preceding clause, wherein the nozzle comprises an arm having one or more apertures, wherein the arm extends parallel to at least a portion of the at least one wall.

The de-powdering system of any preceding clause, wherein the at least one fluidization mechanism comprises a shield plate configured to obstruct at least a portion of the one or more flow channels.

The de-powdering system of any preceding clause, wherein the at least one fluidization mechanism comprises a shield plate having at least one solid portion and at least one open portion, wherein the at least one open portion is configured to enable passage of the fluid from the flow chamber to the support chamber.

The de-powdering system of any preceding clause, wherein the one or more flow channels comprises a plurality of concentrically located flow channels.

A de-powdering system, comprising: an enclosure defining a cavity for receiving an additive manufacturing build, the additive manufacturing build including one or more objects disposed within a powder build material; a sieve basket disposed within the cavity, and wherein the additive manufacturing build is disposed within the sieve basket; and at least one fluidization mechanism configured to fluidize the unbound powder build material, and wherein the sieve basket is removable from the sieve basket to remove the one or more objects from the powder build material.

A de-powdering method, comprising: moving a build plate, via an actuator, to insert an additive manufacturing build into an enclosure and a sieve basket, wherein the additive manufacturing build includes one or more objects disposed within a powder build material; coupling a fluidization mechanism to an end of the enclosure to close the end of the enclosure; securing the build plate to an end of the sieve basket to close the end of the sieve basket; inverting, together, the enclosure, the sieve basket, the fluidization mechanism, and the build plate; removing the build plate from the sieve basket; actuating the fluidization mechanism to fluidize the powder build material; and removing the sieve basket from the enclosure, wherein at least a portion of the powder build material drains out of the sieve basket and remains within the enclosure.

A de-powdering system, comprising: an enclosure having one or more sidewalls defining a cavity; a sieve structure positionable within the cavity, wherein an additive manufacturing build is movable into the enclosure and into the sieve structure, the additive manufacturing build including one or more objects disposed within a powder build material, the sieve structure comprising one or more sieve sidewalls and a sieve endwall; and a fluidization mechanism fluidically couplable to a fluid source and the sieve structure, the fluid source actuatable to inject a fluid into the additive manufacturing build via the fluidization mechanism to fluidize unbound portions of the powder build material, wherein the unbound portion of the powder build material passes through at least the sieve endwall of the sieve structure and away from the one or more objects.

The de-powdering system of any preceding clause, wherein the fluidization mechanism comprises at least one of a vibration mechanism or a fluidization manifold.

The de-powdering system of any preceding clause, wherein the sieve endwall is couplable to the one or more sieve sidewalls to form a sieve basket.

The de-powdering system of any preceding clause, wherein the sieve basket is movably disposed within the enclosure such that the sieve basket is removable from the enclosure while containing the one or more objects and the unbound portion of the powder build material remains within the enclosure.

The de-powdering system of any preceding clause, wherein the fluidization mechanism comprises one or more flow channels to enable the unbound portion of the powder build material to flow through the one or more flow channels.

The de-powdering system of any preceding clause, wherein the fluidization mechanism comprises one or more vibration mechanisms, the one or more vibration mechanisms actuatable to induce vibrations into the additive manufacturing build.

A de-powdering method, comprising: providing a support chamber defined by one or more sidewalls configured to contain an additive manufacturing build, wherein the additive manufacturing build includes one or more objects disposed within a powder build material; fluidically coupling a fluidization mechanism to the support chamber, the fluidization mechanism comprising one or more flow channels; fluidically coupling a fluid source to the fluidization mechanism; and actuating the fluid source to provide a fluid from the fluid source to the support chamber and inject the fluid into the support chamber via the one or more flow channels, the one or more flow channels oriented to introduce a swirling flow of the fluid into the support chamber to fluidize at least a portion of the powder build material within the support chamber.

The de-powdering method of any preceding clause, further comprising forming the one or more flow channels in a wall disposed contiguously with the support chamber.

The de-powdering method of any preceding clause, wherein at least one of the one or more flow channels comprises an outlet disposed in fluid communication with the support chamber, and further comprising forming the outlet disposed at between five degrees (5°) and fifteen degrees (15°) with respect to a side of a wall facing the support chamber.

The de-powdering method of any preceding clause, further comprising: disposing a sieve basket within the support chamber, wherein the additive manufacturing build is disposed within the sieve basket; and removing the sieve basket from the support chamber while containing the one or more objects while the unbound portion of the powder build material remains within the support chamber.

The de-powdering method of any preceding clause, wherein the fluidization mechanism comprises a nozzle, and further comprising moving the nozzle to inject the fluid into the support chamber via the one or more flow channels.

The de-powdering method of any preceding clause, wherein the fluidization mechanism comprises a shield plate having at least one solid portion and at least one open portion, wherein the at least one open portion enables passage of the fluid to the support chamber, and further comprising moving the shield plate with respect to the support chamber.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. A de-powdering system, comprising:
one or more sidewalls defining a support chamber configured to contain an additive manufacturing build, wherein the additive manufacturing build includes one or more objects disposed within a powder build material; and
a fluidization mechanism fluidically couplable to a fluid source, and wherein the fluidization mechanism includes one or more flow channels fluidically coupled to the support chamber, and wherein the fluid source is actuatable to provide a fluid from the fluid source to the support chamber and inject the fluid into the support chamber via the one or more flow channels, the one or more flow channels oriented to introduce a swirling flow of the fluid into the support chamber to fluidize at least a portion of the powder build material within the support chamber.

2. The de-powdering system of claim 1, wherein the support chamber includes a wall defining a lower boundary of the support chamber, and wherein the one or more flow channels extend through the wall.

3. The de-powdering system of claim 1, wherein the fluidization mechanism comprises a shield plate, the shield plate being movable to obstruct at least a portion of the one or more flow channels.

4. The de-powdering system of claim 1, wherein the fluidization mechanism comprises:
a shield plate having at least one solid portion and at least one open portion, wherein the at least one open portion enables passage of the fluid to the support chamber; and
an actuator actuatable to move the shield plate with respect to the support chamber.

5. The de-powdering system of claim 1, wherein the fluidization mechanism comprises a nozzle fluidically couplable to the fluid source, wherein the nozzle is movable to inject the fluid into the support chamber.

6. The de-powdering system of claim 1, wherein the fluidization mechanism comprises:
a nozzle fluidically couplable to the fluid source, wherein the nozzle comprises an arm having one or more apertures; and
an actuator actuatable to move the nozzle with respect to the support chamber.

7. The de-powdering system of claim 1, wherein the one or more flow channels comprises a plurality of concentrically located flow channels.

8. The de-powdering system of claim 1, wherein at least one of the one or more flow channels comprises:
an inlet disposed in fluid communication with the fluid source;
an outlet disposed in fluid communication with the support chamber and located downstream of the inlet; and
a transition portion extending from the inlet to the outlet, wherein the transition portion changes an angular direction of a flow of the fluid through the at least one of the one or more flow channels.

9. The de-powdering system of claim 8, wherein the outlet is disposed at between five degrees (5°) and fifteen degrees (15°) with respect to a side of a wall facing the support chamber.

10. A de-powdering method, comprising:
providing a support chamber defined by one or more sidewalls configured to contain an additive manufacturing build, wherein the additive manufacturing build includes one or more objects disposed within a powder build material;
fluidically coupling a fluidization mechanism to the support chamber, the fluidization mechanism comprising one or more flow channels;
fluidically coupling a fluid source to the fluidization mechanism; and
actuating the fluid source to provide a fluid from the fluid source to the support chamber and inject the fluid into the support chamber via the one or more flow channels, the one or more flow channels oriented to introduce a swirling flow of the fluid into the support chamber to fluidize at least a portion of the powder build material within the support chamber.

11. The de-powdering method of claim 10, further comprising forming the one or more flow channels in a wall disposed contiguously with the support chamber.

12. The de-powdering method of claim 11, wherein at least one of the one or more flow channels comprises an outlet disposed in fluid communication with the support chamber, and further comprising forming the outlet disposed at between five degrees (5°) and fifteen degrees (15°) with respect to a side of a wall facing the support chamber.

13. The de-powdering method of claim 10, further comprising:
disposing a sieve basket within the support chamber, wherein the additive manufacturing build is disposed within the sieve basket; and
removing the sieve basket from the support chamber while containing the one or more objects while the unbound portion of the powder build material remains within the support chamber.

14. The de-powdering method of claim 10, wherein the fluidization mechanism comprises a nozzle, and further comprising moving the nozzle to inject the fluid into the support chamber via the one or more flow channels.

15. The de-powdering method of claim 10, wherein the fluidization mechanism comprises a shield plate having at least one solid portion and at least one open portion, wherein the at least one open portion enables passage of the fluid to the support chamber, and further comprising moving the shield plate with respect to the support chamber.
